# EUROPEAN PATENT APPLICATION

(11) **EP 4 806 680 A1**
(43) Date of publication of application: **16.09.2026**
(21) Application number: 24921776.1
(22) Date of filing: 19.12.2024
(51) Int. Cl.: B60H 1/00, B60K 1/00

(54) **THERMAL MANAGEMENT SYSTEM AND VEHICLE**

(30) Priority: 29.01.2024 CN 202410125304
(71) Applicant: ZHEJIANG ZEEKR INTELLIGENT TECHNOLOGY CO., LTD., Ningbo, Zhejiang 315899 (CN); ZHEJIANG GEELY HOLDING GROUP CO., LTD, Hangzhou, Zhejiang 310051 (CN)
(72) Inventor: LIU, Yabin, Ningbo, Zhejiang 315899 (CN); XIA, Songyong, Ningbo, Zhejiang 315899 (CN); WANG, Jian, Ningbo, Zhejiang 315899 (CN); YANG, Jiachuan, Ningbo, Zhejiang 315899 (CN); LIAO, Xingdong, Ningbo, Zhejiang 315899 (CN)
(74) Representative: Michalski Hüttermann & Partner mbB
(86) International application number: PCT/CN2024/140589
(87) International publication number: WO 2025/161754

(57) **Abstract**

Provided are a thermal management system and a vehicle. The thermal management system includes a first flow path (11), a second flow path (12), an expansion tank (13), and a switching valve (14). The first flow path (11) includes a first coolant pump (15), the second flow path (12) includes a second coolant pump (16), and the expansion tank (13) includes a first coolant supply port (19) and a second coolant supply port (20) in communication with each other. When the switching valve (14) is in a first state, the first flow path (11) and the second flow path (12) are separately in communication with the expansion tank (13) to form a first coolant circuit (21) flowing through the first flow path (11) and the expansion tank (13), and a second coolant circuit (22) flowing through the second flow path (12) and the expansion tank (13), the first coolant pump (15) is configured to circulate a coolant in the first coolant circuit (21), and the second coolant pump (16) is configured to circulate the coolant in the second coolant circuit (22). When the switching valve (14) is in a second state, the first flow path (11) is separated from the second flow path (12), and the expansion tank (13) is configured to supply the coolant to the first coolant pump (15) and the second coolant pump (16) through the first coolant supply port (19) and the second coolant supply port (20), respectively.

## Description

### CROSS-REFERENCE TO RELATED APPLICATIONS

The present disclosure claims priority to Chinese Patent Application No. 202410125304.4, filed on January 29, 2024, which is incorporated herein by reference in its entirety.

### TECHNICAL FIELD

The present disclosure relates to, but is not limited to, the field of thermal management technologies, and in particular, to a thermal management system and a vehicle.

### BACKGROUND

A thermal management system in a vehicle is a system designed to control temperature and heat distribution inside the vehicle. An expansion tank in the thermal management system may provide functions of coolant refilling and gas-discharge. Some expansion tanks are connected in series to a coolant flow path where a battery is located, so that coolant in the coolant flow path where the battery is located exchanges heat with coolant in a coolant flow path where an electric drive assembly is located, increasing the heat leakage.

### SUMMARY

The following is a summary of subject matter described in detail herein. This summary is not intended to limit the scope of protection of the claims.

The present disclosure provides a thermal management system and a vehicle.

The present disclosure provides a thermal management system, including: a first flow path, including a battery and a first coolant pump for the battery; a second flow path, including an electric drive assembly and a second coolant pump for the electric drive assembly; an expansion tank, including a first coolant supply port and a second coolant supply port in communication with each other, the first coolant supply port being connected to a coolant inlet of the first coolant pump, and the second coolant supply port being connected to a coolant inlet of the second coolant pump; and a switching valve, the first flow path and the second flow path being connected to the switching valve, where the switching valve is configurable in a first state and a second state; in response to the switching valve being in the first state, the first flow path and the second flow path are separately in communication with the expansion tank, to form a first coolant circuit flowing through the first flow path and the expansion tank and a second coolant circuit flowing through the second flow path and the expansion tank; the first coolant pump is configured to circulate a coolant through the first coolant circuit; and the second coolant pump is configured to circulate the coolant through the second coolant circuit; and in response to the switching valve being in the second state, the first flow path is separated from the second flow path, and the expansion tank is configured to supply the coolant to the first coolant pump and the second coolant pump through the first coolant supply port and the second coolant supply port, respectively.

Optionally, the thermal management system further includes a third flow path connected to the switching valve, where the third flow path includes a radiator, one port of the radiator being connected to the switching valve, and the other port of the radiator being connected between the switching valve and the coolant inlet of the second coolant pump.

Optionally, in response to the switching valve being in the first state, the first flow path is in communication with the third flow path, and the first coolant circuit passes through the third flow path; and in response to the switching valve being in the second state, the third flow path is in communication with the second flow path.

Optionally, the expansion tank further includes a vent port, the radiator is connected to the vent port, and the vent port is configured to discharge gas from the radiator.

Optionally, the thermal management system further includes a refrigerant circuit, and a first heat exchange flow path that is connected to the switching valve, where the refrigerant circuit includes a first heat exchanger and a compressor, the first heat exchanger being connected to an inlet of the compressor; and the first heat exchange flow path passes through the first heat exchanger.

Optionally, in response to the switching valve being in the first state, the first flow path is in communication with the first heat exchange flow path, and the first coolant circuit passes through the first heat exchange flow path; and in response to the switching valve being in the second state, the first heat exchange flow path is selectively in communication with one of the first flow path and the second flow path.

Optionally, the thermal management system further includes a refrigerant circuit, and a second heat exchange flow path that is connected to the switching valve, where the refrigerant circuit includes a second heat exchanger and a compressor, the second heat exchanger being connected to an outlet of the compressor; and the second heat exchange flow path passes through the second heat exchanger.

Optionally, in response to the switching valve being in the first state, the second heat exchange flow path is in communication with the second flow path, and the second coolant circuit passes through the second heat exchange flow path; and in response to the switching valve being in the second state, the second heat exchange flow path is selectively in communication with one of the first flow path and the second flow path.

Optionally, the second heat exchange flow path further includes a first coolant branch connected in parallel to the second heat exchanger; the first coolant branch includes a check valve; and in response to the switching valve being in the first state, the second flow path is in communication with one of the check valve and the second heat exchanger, and the second coolant circuit passes through the check valve or the second heat exchanger.

Optionally, the second heat exchange flow path further includes a third coolant pump, the first coolant branch is connected in parallel to the third coolant pump, a coolant inlet of the third coolant pump is connected between the first coolant branch and the switching valve, and a coolant outlet of the third coolant pump is connected to a coolant inlet of the second heat exchanger; and the third coolant pump is configured to enable the coolant to flow through the second heat exchanger.

Optionally, the second heat exchange flow path further includes a three-way valve, and a second coolant branch that is connected in parallel to the second heat exchanger; the second coolant branch includes a heater core; an inlet of the three-way valve is connected to a coolant outlet of the second heat exchanger, a first outlet of the three-way valve is connected to the switching valve, and a second outlet of the three-way valve is connected to the second coolant branch; and the inlet of the three-way valve is in communication with at least one of the first outlet of the three-way valve or the second outlet of the three-way valve.

Optionally, the second heat exchange flow path further includes a heater connected to a coolant outlet of the second heat exchanger and configured to heat the coolant in the second heat exchange flow path.

Optionally, the electric drive assembly includes one or more of a motor, an on-board charger, a converter, and an autonomous driving controller.

The present disclosure provides a vehicle, including the thermal management system according to any one of the above embodiments.

The thermal management system according to the present disclosure includes the first flow path, the second flow path, the expansion tank, and the switching valve. The first flow path includes the first coolant pump. The second flow path includes the second coolant pump. When the switching valve is in the first state, the first flow path and the second flow path are separately in communication with the expansion tank, to form the first coolant circuit flowing through the first flow path and the expansion tank and the second coolant circuit flowing through the second flow path and the expansion tank. Gas may be discharged separately from the coolant in the first coolant circuit and the coolant in the second coolant circuit through the expansion tank, enabling the expansion tank to discharge the gas independently for the first flow path or to discharge the gas independently for the second flow path, which can significantly increase a refilling speed of the coolant and shorten the gas-discharge time for the coolant. When the switching valve is in the second state, the first flow path and the second flow path are separated from each other, and the expansion tank is configured to supply the coolant to the first coolant pump and the second coolant pump through the first coolant supply port and the second coolant supply port, respectively. No circuit can be formed in the expansion tank, so that the coolant flowing through the battery and the coolant flowing through the electric drive assembly cannot exchange heat at the expansion tank, which reduces the heat leakage caused by the heat exchange between the first flow path and the second flow path, thereby significantly reducing the heat leakage.

It is to be understood that both the above general description and the following detailed description are exemplary and explanatory only, and are not restrictive of the present disclosure. Other aspects will be apparent upon reading and understanding the accompanying drawings and detailed description.

### BRIEF DESCRIPTION OF DRAWINGS

The accompanying drawings, which are incorporated in and constitute a part of this specification, illustrate embodiments consistent with the present disclosure and, together with the specification, serve to explain the principles of the present disclosure.
FIG. 1 illustrates a schematic diagram of a switching valve of a thermal management system according to an embodiment of the present disclosure in a first state.
FIG. 2 illustrates another schematic diagram of the switching valve of the thermal management system shown in FIG. 1 in the first state.
FIG. 3 illustrates a schematic diagram of the switching valve of the thermal management system shown in FIG. 1 in a second state.
FIG. 4 illustrates another schematic diagram of the switching valve of the thermal management system shown in FIG. 1 in the second state.

### DETAILED DESCRIPTION

Reference will now be made in detail to exemplary embodiments, examples of which are illustrated in the accompanying drawings. When the following description refers to the drawings, the same numerals in different accompanying drawings indicate the same or similar elements, unless otherwise indicated. The implementations described in the following exemplary embodiments do not represent all implementations consistent with the present disclosure. Rather, they are merely examples of apparatuses and methods consistent with some aspects of the present disclosure as detailed in the appended claims.

The terms used in the present disclosure are only for the purpose of describing specific embodiments, and are not intended to limit the present disclosure. Unless otherwise defined, technical terms or scientific terms used in the present disclosure should have ordinary meanings understood by those of ordinary skill in the art to which the present disclosure belongs. "First", "second", and similar words used in the specification and claims of the present disclosure do not indicate any order, quantity, or importance, but are merely used to distinguish between different components. Similarly, words such as "a" or "an" do not indicate quantity limitation, but indicate the presence of at least one. "A plurality of" or "several" means two or more. Unless otherwise indicated, terms such as "front", "rear", "lower", and/or "top", "bottom", "upper" are merely for ease of description, and are not limited to one position or one spatial orientation. Words such as "include" or "comprise" mean that elements or objects before "include" or "comprise" cover elements or objects listed after "include" or "comprise" and their equivalents, and do not exclude other elements or objects. Words such as "connect" or "couple" are not limited to physical or mechanical connections, but may include electrical connections, whether direct or indirect.

The terms used in the present disclosure are only for the purpose of describing specific embodiments, and are not intended to limit the present disclosure. As used in the present disclosure and the appended claims, the singular forms "a", "an", and "the" are intended to include the plural forms as well, unless the context clearly indicates otherwise. It should also be understood that the term "and/or" used herein refers to and includes any or all possible combinations of one or more of the associated listed items.

The present disclosure provides a thermal management system and a vehicle. The thermal management system and the vehicle according to the present disclosure will be described in detail below with reference to the accompanying drawings. The features in the following embodiments and implementations may be combined with each other without conflict.

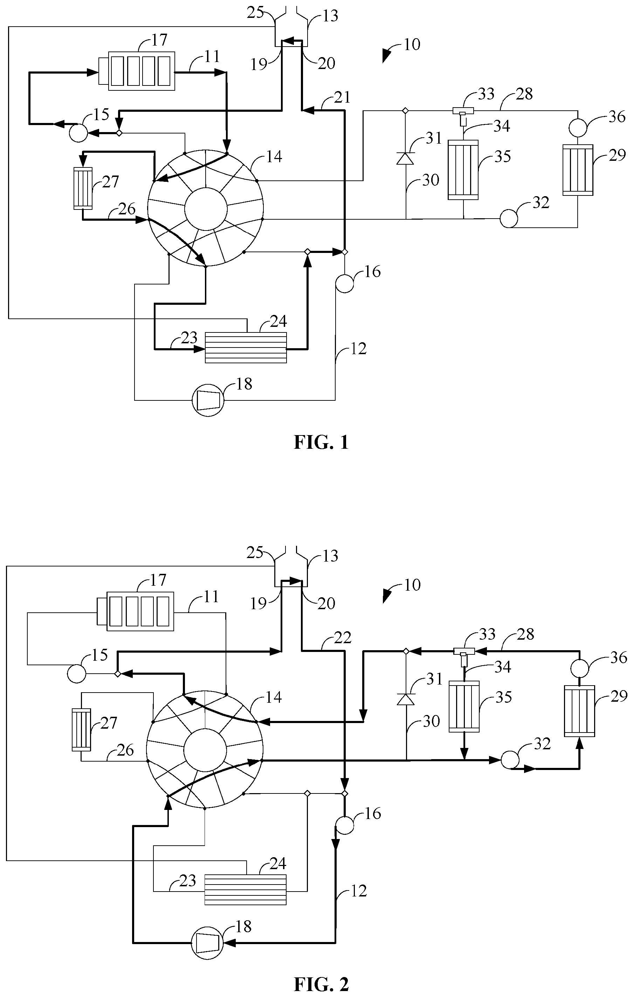

Referring to FIGS. 1 to 4, a thermal management system 10 may be applied to a vehicle, such as a new energy vehicle. The thermal management system 10 includes a first flow path 11, a second flow path 12, an expansion tank 13, and a switching valve 14. Coolant may flow in the first flow path 11 and the second flow path 12. The coolant may be cooling water.

The first flow path 11 may include a battery 17. The first flow path 11 includes a first coolant pump 15 for the battery 17. A coolant inlet of the first coolant pump 15 may be connected to the switching valve 14, and a coolant outlet of the first coolant pump 15 may be connected to the battery 17, to provide the coolant to the battery 17. The first coolant pump 15 may accelerate the circulation of the coolant.

The second flow path 12 may include an electric drive assembly 18, where the electric drive assembly 18 may include one or more of a motor, an on-board charger, a converter, and an autonomous driving controller, which is not limited in the present disclosure. The second flow path 12 includes a second coolant pump 16 for the electric drive assembly 18. A coolant inlet of the second coolant pump 16 may be connected to the switching valve 14, and a coolant outlet of the second coolant pump 16 may be connected to the electric drive assembly 18, to provide the coolant to the electric drive assembly 18. The second coolant pump 16 may accelerate the circulation of the coolant.

The expansion tank 13 includes a first coolant supply port 19 and a second coolant supply port 20 in communication with each other. The first coolant supply port 19 is connected to the coolant inlet of the first coolant pump 15. The first coolant supply port 19 may be connected between the coolant inlet of the first coolant pump 15 and the switching valve 14. The second coolant supply port 20 is connected to the coolant inlet of the second coolant pump 16. The second coolant supply port 20 may be connected between the coolant inlet of the second coolant pump 16 and the switching valve 14. In this way, the expansion tank 13 may supply the coolant to the first coolant pump 15 through the first coolant supply port 19, and may supply the coolant to the second coolant pump 16 through the second coolant supply port 20. Moreover, when the first flow path 11 and the second flow path 12 are in communication with the expansion tank 13, the coolant may pass through the expansion tank 13 via the first coolant supply port 19 and the second coolant supply port 20 of the expansion tank 13, so that gas may be discharged from the coolant.

The first flow path 11 and the second flow path 12 are connected to the switching valve 14. The switching valve 14 may be a multi-way valve. In this embodiment, the switching valve 14 is a nine-way valve. The switching valve 14 is configurable in a first state and a second state. Referring to FIGS. 1 and 2, when the switching valve 14 is in the first state, the first flow path 11 and the second flow path 12 are separately in communication with the expansion tank 13, to form a first coolant circuit 21 flowing through the first flow path 11 and the expansion tank 13 and a second coolant circuit 22 flowing through the second flow path 12 and the expansion tank 13. The first coolant pump 15 is configured to circulate the coolant through the first coolant circuit 21, and only the first coolant pump 15 may be activated to circulate the coolant through the first coolant circuit 21. The second coolant pump 16 is configured to circulate the coolant through the second coolant circuit 22, and only the second coolant pump 16 may be activated to circulate the coolant through the second coolant circuit 22. A flow direction in which the coolant is circulated through the first coolant circuit 21 is illustrated in FIG. 1, and the coolant in the first coolant circuit 21 may flow through the first flow path 11 and the expansion tank 13. Gas in the battery 17 may be transmitted to the expansion tank 13 along with the coolant, so that the gas may be discharged from the coolant. A flow direction in which the coolant is circulated through the second coolant circuit 22 is illustrated in FIG. 2, and the coolant in the second coolant circuit 22 may flow through the second flow path 12 and the expansion tank 13. Gas in the electric drive assembly 18 may be transmitted to the expansion tank 13 along with the coolant, so that the gas may be discharged from the coolant. When the switching valve 14 is in the first state, a coolant circuit may be divided into the first coolant circuit 21 and the second coolant circuit 22 by controlling the first coolant pump 15 and the second coolant pump 16, so that the coolant may be separately circulated in the first coolant circuit 21 or the second coolant circuit 22. Gas may be discharged separately from the coolant in the first coolant circuit 21 and the coolant in the second coolant circuit 22 through the expansion tank 13, enabling the expansion tank 13 to discharge the gas independently for the first flow path 11 or to discharge the gas independently for the second flow path 12, which can significantly increase a refilling speed of the coolant and shorten the gas-discharge time for the coolant. Moreover, during partial replacement of a component in a flow path, a coolant refilling and gas-discharge cycle may be performed on the flow path where the component is replaced. For example, during replacement of the battery 17, only the gas in the coolant in the first flow path 11 needs to be discharged, so that only the first coolant pump 15 may be activated to circulate the coolant through the first coolant circuit 21. In this way, the time for the coolant refilling and gas-discharge during the partial replacement of the component in the flow path are significantly reduced.

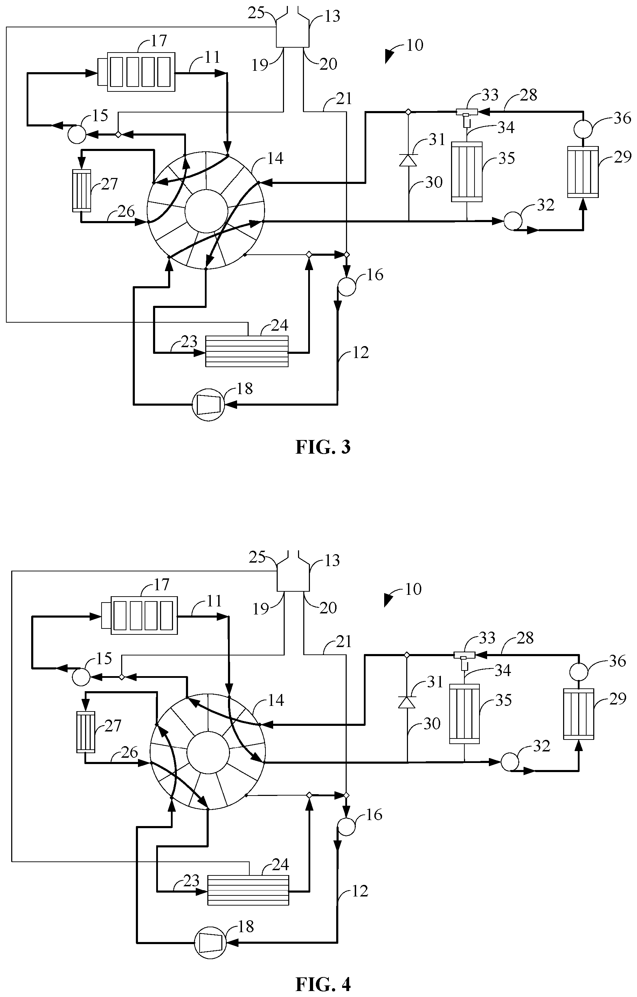

Referring to FIGS. 3 and 4, when the switching valve 14 is in the second state, the first flow path 11 and the second flow path 12 are separated from each other, and the expansion tank 13 is configured to supply the coolant to the first coolant pump 15 and the second coolant pump 16 through the first coolant supply port 19 and the second coolant supply port 20, respectively. The expansion tank 13 is configured to supply the coolant to the first coolant pump 15 through the first coolant supply port 19, and is configured to supply the coolant to the second coolant pump 16 through the second coolant supply port 20. When the switching valve 14 is in the second state, the first flow path 11 is only connected to the first coolant supply port 19 of the expansion tank 13, and the second flow path 12 is only connected to the second coolant supply port 20 of the expansion tank 13. No circuit can be formed in the expansion tank 13, so that the coolant flowing through the battery 17 and the coolant flowing through the electric drive assembly 18 cannot exchange heat at the expansion tank 13, which reduces the heat leakage caused by the heat exchange between the first flow path 11 and the second flow path 12, thereby significantly reducing the heat leakage and in turn reducing the system energy consumption.

In an embodiment, the thermal management system 10 further includes a third flow path 23 connected to the switching valve 14, and the third flow path 23 includes a radiator 24. The radiator 24 may be an air-cooled radiator, so that the coolant in the third flow path 23 may exchange heat with the air at the radiator 24, so as to cool the coolant. One port of the radiator 24 is connected to the switching valve 14, and the other port of the radiator 24 is connected between the switching valve 14 and the coolant inlet of the second coolant pump 16. Referring to FIG. 1, when the switching valve 14 is in the first state, the first flow path 11 is in communication with the third flow path 23, and the first coolant circuit 21 passes through the third flow path 23. The first flow path 11, the third flow path 23, and the expansion tank 13 form the first coolant circuit 21, the coolant may flow through the battery 17, the radiator 24, and the expansion tank 13, and the gas in the battery 17 and the radiator 24 is transmitted to the expansion tank 13 along with the coolant, which may be used for the coolant refilling and gas-discharge during replacement of the battery 17 and the radiator 24. Referring to FIGS. 3 and 4, when the switching valve 14 is in the second state, the third flow path 23 is in communication with the second flow path 12. In this way, the radiator 24 is activated, so that the radiator 24 may cool the electric drive assembly 18.

In an embodiment, the expansion tank 13 further includes a vent port 25, the radiator 24 is connected to the vent port 25, and the vent port 25 is configured to discharge gas from the radiator 24. The gas stored in a water chamber of the radiator 24 during an operation of the thermal management system 10 may be discharged, thereby facilitating the normal operation of the thermal management system 10.

In an embodiment, the thermal management system 10 further includes a refrigerant circuit (not illustrated), and a first heat exchange flow path 26 that is connected to the switching valve 14. Refrigerant may flow in the refrigerant circuit. The refrigerant circuit includes a first heat exchanger 27 and a compressor, and the compressor may be an electric compressor. The first heat exchanger 27 is connected to an inlet of the compressor. The first heat exchange flow path 26 passes through the first heat exchanger 27. The first heat exchanger 27 may be configured to enable heat exchange between the refrigerant in the refrigerant circuit and the coolant in the first heat exchange flow path 26, so that a temperature of the coolant in the first heat exchange flow path 26 can be increased. Referring to FIG. 1, when the switching valve 14 is in the first state, the first flow path 11 is in communication with the first heat exchange flow path 26, and the first coolant circuit 21 passes through the first heat exchange flow path 26. The first flow path 11, the first heat exchange flow path 26, and the expansion tank 13 form the first coolant circuit 21, the coolant may flow through the battery 17, the first heat exchanger 27, and the expansion tank 13, and the gas in the battery 17 and the first heat exchanger 27 is transmitted to the expansion tank 13 along with the coolant, which may be used for the coolant refilling and gas-discharge during replacement of the battery 17 and the first heat exchanger 27. Referring to FIGS. 3 and 4, when the switching valve 14 is in the second state, the first heat exchange flow path 26 is selectively in communication with one of the first flow path 11 and the second flow path 12. In the embodiment illustrated in FIG. 3, the first heat exchange flow path 26 is in communication with the first flow path 11, and the first heat exchanger 27 may reduce a temperature of the coolant in the first flow path 11, so as to cool the battery 17 by using the first heat exchanger 27. In the embodiment illustrated in FIG. 4, the first heat exchange flow path 26 is in communication with the second flow path 12 and the third flow path 23, and the first heat exchanger 27 may absorb heat from an external environment through the radiator 24.

In an embodiment, the thermal management system 10 includes a second heat exchange flow path 28 connected to the switching valve 14. The refrigerant circuit includes a second heat exchanger 29, and the second heat exchanger 29 is connected to an outlet of the compressor. In an embodiment, the refrigerant circuit may include an outdoor heat exchanger, an indoor heat exchanger, a first throttling apparatus, and a second throttling apparatus, where both the first throttling apparatus and the second throttling apparatus may be electronic expansion valves. An outlet of the first heat exchanger 27 and an outlet of the indoor heat exchanger are connected to the inlet of the compressor, the outlet of the compressor is connected to an inlet of the second heat exchanger 29, an outlet of the second heat exchanger 29 is connected to an inlet of the outdoor heat exchanger, an outlet of the outdoor heat exchanger is connected to one end of the first throttling apparatus and one end of the second throttling apparatus, the other end of the first throttling apparatus is connected to an inlet of the indoor heat exchanger, and the other end of the second throttling apparatus is connected to an inlet of the first heat exchanger 27. The second heat exchange flow path 28 passes through the second heat exchanger 29. The second heat exchanger 29 may be configured to enable heat exchange between the refrigerant in the refrigerant circuit and the coolant in the second heat exchange flow path 28, so that a temperature of the coolant in the second heat exchange flow path 28 may be increased. Referring to FIG. 2, when the switching valve 14 is in the first state, the second heat exchange flow path 28 is in communication with the second flow path 12, and the second coolant circuit 22 passes through the second heat exchange flow path 28. The second flow path 12, the second heat exchange flow path 28, and the expansion tank 13 form the second coolant circuit 22, the coolant may flow through the electric drive assembly 18, the second heat exchanger 29, and the expansion tank 13, and the gas in the electric drive assembly 18 and the second heat exchanger 29 is transmitted to the expansion tank 13 along with the coolant, which may be used for the coolant refilling and gas-discharge during replacement of the electric drive assembly 18 and the second heat exchanger 29. Referring to FIGS. 3 and 4, when the switching valve 14 is in the second state, the second heat exchange flow path 28 is selectively in communication with one of the first flow path 11 and the second flow path 12. In the embodiment illustrated in FIG. 3, the second heat exchange flow path 28 is in communication with the second flow path 12. The radiator 24 may be used to cool the coolant in the second heat exchange flow path 28, so that the radiator 24 may be used to cool the coolant passing through the second heat exchanger 29, thereby improving the heat exchange efficiency of the second heat exchanger 29. In the embodiment illustrated in FIG. 4, the second heat exchange flow path 28 is in communication with the first flow path 11. In this way, the battery 17 may be heated through the second heat exchange flow path 28, which is beneficial to rapid heating of the battery 17.

In an embodiment, the second heat exchange flow path 28 further includes a first coolant branch 30 connected in parallel to the second heat exchanger 29. The first coolant branch 30 includes a check valve 31. A first end of the check valve 31 is connected to a coolant inlet of the second heat exchanger 29, a second end of the check valve 31 is connected to a coolant outlet of the second heat exchanger 29, and the check valve 31 allows unidirectional flow from the first end to the second end. In this way, backflow of the coolant may be prevented. Referring to FIG. 2, when the switching valve 14 is in the first state, the second flow path 12 is in communication with one of the check valve 31 and the second heat exchanger 29. The second flow path 12 may be in communication with the check valve 31. The second flow path 12 may also be in communication with the second heat exchanger 29. The second coolant circuit 22 passes through the check valve 31 or the second heat exchanger 29. In this way, after the replacement of the electric drive assembly 18, the coolant enters the expansion tank 13 without passing through the second heat exchanger 29, thereby accelerating the gas-discharge from the coolant.

In an embodiment, the second heat exchange flow path 28 further includes a third coolant pump 32, the first coolant branch 30 is connected in parallel to the third coolant pump 32, a coolant inlet of the third coolant pump 32 is connected between the first coolant branch 30 and the switching valve 14, and a coolant outlet of the third coolant pump 32 is connected to the coolant inlet of the second heat exchanger 29. The third coolant pump 32 is configured to enable the coolant to flow through the second heat exchanger 29. The third coolant pump 32 may accelerate the flow of the coolant through the second heat exchanger 29.

In an embodiment, the second heat exchange flow path 28 further includes a three-way valve 33 and a second coolant branch 34 connected in parallel to the second heat exchanger 29. The second coolant branch 34 includes a heater core 35. An inlet of the three-way valve 33 is connected to the outlet of the second heat exchanger 29, a first outlet of the three-way valve 33 is connected to the switching valve 14, and a second outlet of the three-way valve 33 is connected to the second coolant branch 34. The inlet of the three-way valve 33 is in communication with at least one of the first outlet of the three-way valve 33 or the second outlet of the three-way valve 33. When the inlet of the three-way valve 33 is in communication with the first outlet of the three-way valve 33, the coolant enters other flow paths directly through the switching valve 14 after passing through the second heat exchanger 29. When the inlet of the three-way valve 33 in communication with the second outlet of the three-way valve 33, the coolant may pass through the heater core 35 after passing through the second heat exchanger 29. In this way, when the temperature inside the vehicle is relatively low, the coolant may flow through the heater core 35 to assist in heating the air inside the vehicle, or when the temperature inside the vehicle is appropriate, the coolant may not flow through the heater core 35, so that the thermal management system 10 has better adaptability. When the switching valve 14 is in the first state, the inlet of the three-way valve 33 may be in communication with both the first outlet of the three-way valve 33 and the second outlet of the three-way valve 33, so that gas in the heater core 35 and the second heat exchanger 29 may be transmitted to the expansion tank 13 along with the coolant, which is beneficial to the discharge of the gas.

In an embodiment, the second heat exchange flow path 28 further includes a heater 36. The heater 36 may be a high-voltage heater. The heater 36 may be connected in series to the second heat exchanger 29, and the heater 36 may be connected in parallel to the check valve 31. The heater 36 is connected to the coolant outlet of the second heat exchanger 29, and the heater 36 is configured to heat the coolant in the second heat exchange flow path 28. The heater 36 may heat the coolant in the second heat exchange flow path 28, to heat components such as the heater core 35 and the battery 17, thereby increasing a heating rate of the thermal management system 10.

Referring to FIGS. 1 and 2, in this embodiment, when the switching valve 14 is in the first state, the first flow path 11, the first heat exchange flow path 26, and the third flow path 23 are communicated in series, and the second flow path 12 and the second heat exchange flow path 28 are communicated in series.

In the embodiment illustrated in FIG. 1, the first flow path 11, the first heat exchange flow path 26, the third flow path 23, and the expansion tank 13 are connected in series to form the first coolant circuit 21, and only the first coolant pump 15 is activated to circulate the coolant through the first coolant circuit 21. The coolant may sequentially flow through the battery 17, the first heat exchanger 27, the radiator 24, and the expansion tank 13, so as to discharge the gas from the battery 17, the first heat exchanger 27, and the radiator 24 through the expansion tank 13. This may be used for the coolant refilling and gas-discharge during replacement of components of the battery 17, the first heat exchanger 27, and the radiator 24.

In the embodiment illustrated in FIG. 2, the second flow path 12, the second heat exchange flow path 28, and the expansion tank 13 are connected in series to form the second coolant circuit 22, the first outlet and the second outlet of the three-way valve 33 are both opened to an opening degree of 50%, and the second coolant pump 16 and the third coolant pump 32 are activated to circulate the coolant through the second coolant circuit 22. The coolant may sequentially flow through the electric drive assembly 18, the second heat exchanger 29, the heater 36, the heater core 35, and the expansion tank 13, so as to discharge the gas from the electric drive assembly 18, the second heat exchanger 29, the heater 36, and the heater core 35 through the expansion tank 13. This may be used for the coolant refilling and gas-discharge during replacement of components of the electric drive assembly 18, the second heat exchanger 29, the heater 36, and the heater core 35.

Referring to FIGS. 3 and 4, in this embodiment, when the switching valve 14 is in the second state, the first flow path 11 and the second flow path 12 are separated from each other. Specifically, the second state may include at least a first sub-state and a second sub-state, where the battery 17 may be cooled when the switching valve 14 is in the first sub-state (FIG. 3), and the battery 17 may be heated when the switching valve 14 is in the second sub-state (FIG. 4). The first flow path 11 and the second flow path 12 are separated from each other, the coolant in the first flow path 11 cannot be circulated through the expansion tank 13, and the coolant in the second flow path 12 cannot be circulated through the expansion tank 13. In this way, the coolant flowing through the battery 17 and the coolant flowing through the electric drive assembly 18 cannot exchange heat at the expansion tank 13, thereby reducing the heat leakage.

In the embodiment illustrated in FIG. 3, when the switching valve 14 is in the first sub-state, the first flow path 11 and the first heat exchange flow path 26 are communicated in series, and the second flow path 12, the third flow path 23, and the second heat exchange flow path 28 are communicated in series. In this way, the battery 17 may be cooled by the first heat exchanger 27, and the electric drive assembly 18 and the second heat exchanger 29 may be cooled by the radiator 24.

In the embodiment illustrated in FIG. 4, when the switching valve 14 is in the second sub-state, the first flow path 11 and the second heat exchange flow path 28 are communicated in series, and the second flow path 12, the third flow path 23, and the first heat exchange flow path 26 are communicated in series. In this way, the battery 17 may be heated by the second heat exchanger 29, and the first heat exchanger 27 may absorb heat from the external environment through the radiator 24.

The present disclosure further provides a vehicle, including the thermal management system. It should be noted that the descriptions of the thermal management system in the above embodiments and implementations are also applicable to the vehicle in the embodiments of the present disclosure.

Other embodiments of the present disclosure will be apparent to those skilled in the art from consideration of the specification and practice of the present disclosure disclosed herein. The present disclosure is intended to cover any variations, uses, or adaptations of the present disclosure following the general principles thereof and including the common general knowledge or conventional technical means in the art that are not disclosed herein. It is intended that the specification and embodiments be considered as exemplary only, with a true scope and spirit of the present disclosure being indicated by the following claims.

It should be understood that the present disclosure is not limited to the precise structures described above and shown in the accompanying drawings, and various modifications and changes may be made without departing from the scope thereof. The scope of the present disclosure is limited only by the appended claims.

## Claims

1. A thermal management system, comprising:
a first flow path, comprising a battery and a first coolant pump for the battery;
a second flow path, comprising an electric drive assembly and a second coolant pump for the electric drive assembly;
an expansion tank, comprising a first coolant supply port and a second coolant supply port in communication with each other, the first coolant supply port being connected to a coolant inlet of the first coolant pump, and the second coolant supply port being connected to a coolant inlet of the second coolant pump; and
a switching valve, the first flow path and the second flow path being connected to the switching valve,
wherein the switching valve is configurable in a first state and a second state;
in response to the switching valve being in the first state, the first flow path and the second flow path are separately in communication with the expansion tank, to form a first coolant circuit flowing through the first flow path and the expansion tank and a second coolant circuit flowing through the second flow path and the expansion tank; the first coolant pump is configured to circulate a coolant through the first coolant circuit; and the second coolant pump is configured to circulate the coolant through the second coolant circuit; and
in response to the switching valve being in the second state, the first flow path is separated from the second flow path, and the expansion tank is configured to supply the coolant to the first coolant pump and the second coolant pump through the first coolant supply port and the second coolant supply port, respectively.

2. The thermal management system according to claim 1, further comprising a third flow path connected to the switching valve, wherein the third flow path comprises a radiator, one port of the radiator being connected to the switching valve, and the other port of the radiator being connected between the switching valve and the coolant inlet of the second coolant pump.

3. The thermal management system according to claim 2, wherein in response to the switching valve being in the first state, the first flow path is in communication with the third flow path, and the first coolant circuit passes through the third flow path; and
in response to the switching valve being in the second state, the third flow path is in communication with the second flow path.

4. The thermal management system according to claim 2 or 3, wherein the expansion tank further comprises a vent port, the radiator is connected to the vent port, and the vent port is configured to discharge gas from the radiator.

5. The thermal management system according to any one of claims 1 to 4, further comprising a refrigerant circuit, and a first heat exchange flow path that is connected to the switching valve,
wherein
the refrigerant circuit comprises a first heat exchanger and a compressor, the first heat exchanger being connected to an inlet of the compressor; and
the first heat exchange flow path passes through the first heat exchanger.

6. The thermal management system according to claim 5, wherein
in response to the switching valve being in the first state, the first flow path is in communication with the first heat exchange flow path, and the first coolant circuit passes through the first heat exchange flow path; and
in response to the switching valve being in the second state, the first heat exchange flow path is selectively in communication with one of the first flow path and the second flow path.

7. The thermal management system according to any one of claims 1 to 6, further comprising a refrigerant circuit, and a second heat exchange flow path that is connected to the switching valve,
wherein
the refrigerant circuit comprises a second heat exchanger and a compressor, the second heat exchanger being connected to an outlet of the compressor; and
the second heat exchange flow path passes through the second heat exchanger.

8. The thermal management system according to claim 7, wherein
in response to the switching valve being in the first state, the second heat exchange flow path is in communication with the second flow path, and the second coolant circuit passes through the second heat exchange flow path; and
in response to the switching valve being in the second state, the second heat exchange flow path is selectively in communication with one of the first flow path and the second flow path.

9. The thermal management system according to claim 7 or 8, wherein the second heat exchange flow path further comprises a first coolant branch connected in parallel to the second heat exchanger;
the first coolant branch comprises a check valve; and
in response to the switching valve being in the first state, the second flow path is in communication with one of the check valve and the second heat exchanger, and the second coolant circuit passes through the check valve or the second heat exchanger.

10. The thermal management system according to claim 9, wherein the second heat exchange flow path further comprises a third coolant pump, the first coolant branch is connected in parallel to the third coolant pump, a coolant inlet of the third coolant pump is connected between the first coolant branch and the switching valve, and a coolant outlet of the third coolant pump is connected to a coolant inlet of the second heat exchanger; and
the third coolant pump is configured to enable the coolant to flow through the second heat exchanger.

11. The thermal management system according to claim 7 or 8, wherein the second heat exchange flow path further comprises a three-way valve, and a second coolant branch that is connected in parallel to the second heat exchanger;
the second coolant branch comprises a heater core;
an inlet of the three-way valve is connected to a coolant outlet of the second heat exchanger, a first outlet of the three-way valve is connected to the switching valve, and a second outlet of the three-way valve is connected to the second coolant branch; and
the inlet of the three-way valve is in communication with at least one of the first outlet of the three-way valve or the second outlet of the three-way valve.

12. The thermal management system according to claim 7 or 8, wherein the second heat exchange flow path further comprises a heater connected to a coolant outlet of the second heat exchanger and configured to heat the coolant in the second heat exchange flow path.

13. The thermal management system according to any one of claims 1 to 12, wherein the electric drive assembly comprises one or more of a motor, an on-board charger, a converter, and an autonomous driving controller.

14. A vehicle, comprising the thermal management system according to any one of claims 1 to 13.
